# EUROPEAN PATENT SPECIFICATION

(11) **EP 1 559 870 B1**
(45) Date of publication and mention of the grant of the patent: **21.12.2011**
(21) Application number: 05250502.1
(22) Date of filing: 31.01.2005
(51) Int. Cl.: F01D 5/14, F01D 5/22

(54) **Shrouded rotor blade for a turbomachine**
Turbomaschinenlaufschaufel mit Deckband
Aube de rotor carénée pour une turbomachine

(30) Priority: 31.01.2004 US 770322; 31.01.2004 US 770323
(43) Date of publication of application: 03.08.2005
(73) Proprietor: United Technologies Corporation, Hartford, CT 06101 (US)
(72) Inventor: Dube, Bryan P., Columbia, CT 06237 (US); Gray, Eric D., Wallingford, CT 06232 (US)
(74) Representative: Leckey, David Herbert

(56) References cited:
- EP-A- 1 267 042
- GB-A- 1 605 335
- JP-A- 7 233 703
- US-A1- 2003 194 322
- US-B1- 6 491 498

## Description

### Technical Field

This invention relates to rotor blades of the type used in industrial gas turbine engines, and more specifically, to the tip region of such a rotor blade.

### Background of the Invention

Gas turbine engines for aircraft have rotor blades that typically are smaller than rotor blades used in, for example, the turbine of an industrial gas turbine that employs steam as a working medium

The rotor assembly employs such blades with a rotating structure, such as a rotor disk, having an axis of rotation and a plurality of outwardly extending blades. Each blade is disposed about a spanwise axis that extends radially. Generally, the spanwise axis is a radial line referred to as the stacking line which extends outwardly on a radius from the axis of the rotor blade. The rotor blade has a base, commonly called a root, which engages the rotating structure at the inner end of the blade.

The rotor blades each have an airfoil which extends outwardly from the root across the working medium flowpath. The rotor blade typically has a shroud extending between airfoils of adjacent rotor blades at the tip region of the rotor blade. The shroud has cantilevered wings which extend laterally (circumferentially) between adjacent rotor blades. The wings include a portion of a transition zone that extends from the junction with the airfoil and that has an inwardly facing surface which bounds the working medium flowpath. The shroud also has a seal land which extends circumferentially in close proximity to adjacent stator structure to block the working medium gases from leaving the flowpath. In some constructions, a more rigid member extends between the front and rear portions of the wings to carry the seal land and provide a portion of the transitions zone.

The shrouds of adjacent rotor blades abut at contact areas on the laterally facing sides of the shroud. The abutting shrouds reduce blade deflections about the spanwise axis and minimize vibration of the rotor blades. Damping of the blades takes place through rubbing of the contact faces of adjacent shrouds. Additional rotational loads are created by the mass of the shroud as compared with rotor blades having no shrouds. These rotational loads increase stresses at the shroud airfoil interface because of the sudden change in cross-section of the material and increase stresses at the root-disk interface of the rotor blade and the disk. The stresses in the airfoil and the shroud of the rotor blades require heavier designs than non-shrouded blades of equivalent cyclic fatigue life. In addition, the mass of the shroud may cause creep of the airfoil and creep of portions of the shroud in a radial direction because of rotational forces generated under operative conditions.

Accordingly, the Applicant's scientists and engineers have sought to develop shrouds for rotor blades that reduce the concentrated stresses in the rotor blades and demonstrate acceptable resistance to creep without causing additional creep in the airfoil by increasing the mass of the rotor blade.

A rotor blade having the features of the preamble of claim 1 is disclosed in US-BI-6491498. Further such blades are disclosed in GB-A-1605335, EP-A-1267042 and JP 07233703 A.

### Summary of Invention

According to the invention there is provided a rotor blade as set forth in claim 1. According to the present invention, therefore, a rotor blade includes a tip shroud having a depression generally outwardly of the airfoil and generally following the curve of the pressure and suction sides of the airfoil from the leading edge region to the trailing edge region, the tip shroud having wings extending from the sides of the airfoils, each wing having a front portion and a rear portion which continue the surface of the depression, the shroud further including a seal land extending past the sides of the airfoil between the front and rear portions of the wings.

A disclosed tip shroud for a rotor blade shroud attached to an airfoil by a transition zone includes wings extending from the sides of the airfoil and a beam which extends past the airfoil for carrying a seal land and between the wings to divide each wing into a front portion and a rear portion,

The surface contour of a transition zone for a rotor blade shroud at a particular location is defined by the line of intersection of a reference plane P with the surface of the transition zone. The reference plane is referred to as the normal sectioning plane. The reference plane passes through the point at the junction of the transition zone and the airfoil. The junction point is usually the point of tangency of the transition zone with the airfoil. The reference plane P contains a first line perpendicular to the airfoil surface (airfoil section surface) at the junction point and a second line parallel to the stacking line of the airfoil.

Accordingly, the normal sectioning plane P passes through the junction point and is defined by two straight lines passing through the junction point. As shown, for example, this provides an "X axis" which is a first straight line in the plane of the airfoil section normal (perpendicular) to the surface of the airfoil section; and, a "Y-axis," which is perpendicular to the first straight line and also parallel to the stacking line of the airfoil.

The line of intersection of the normal sectioning plane with the transition zone is referred to as a transition line. As will be realized, lines of intersection between a plane and a surface may be straight or curved depending on the orientation of the plane to the surface. Accordingly, the term "transition line" includes straight lines and curved lines. In this application, the line of intersection is viewed perpendicular to the sectioning plane. The definition of the "offset ratio" for a transition line is the ratio of the length or distance "A" of the projection of the transition line along the X-axis of the sectioning plane divided by the length or distance "B" of the projection of the transition line along the spanwise Y-axis. The length A is also referred to as the offset distance of the transition line (or transition zone) from the airfoil and the length B is referred to as the offset distance of the transition line from the shroud.

Bending or the bend of the transition line is a measure of the change in slope per unit length of the transition line as the transition line extends away from the airfoil surface. Thus, at any location, the transition line (transition zone) has a first end at the junction point with the airfoil and a second end at the location on the shroud where the remainder of the shroud extends in cantilevered fashion from the transition zone. This location is where the associated transition line smoothly joins the remainder of the shroud and the instantaneous change in slope is zero, such as at a point of tangency, or where the extension of the transition line on the shroud reverses curvature and bends outwardly.

In one embodiment, a beam which carries the seal land extends laterally across the depression to divide the depression into a front portion and a rear portion, and extends past the sides of the airfoil and is integral with the wings to support the front and rear portions of the wings.

In one embodiment, the radial thickness of the wings is decreased by the depression in the wings which decreases airfoil creep as compared to a wing which does not have a radial depression.

In another embodiment, at least a portion of the wing includes a transition zone that extends from the side of the airfoil to provide a flow path surface of the shroud, the transition zone having a cross-sectional shape which is tapered to the side of the wing.

In one detailed embodiment, the transition line of the wing, which is also the contour of the flow path surface of the shroud for the transition zone of the wing, generally follows the shape of a conical section as it extends away from the airfoil and the depression above the transition zone has a spanwise depth at a first lateral location that is smaller than the spanwise depth of the depression in the wing at a second lateral location that is laterally closer to the airfoil.

In one detailed embodiment, the spanwise depth of the transition zone at the second location is greater than the spanwise depth at the first location. In accordance with the present invention, the transition lines extending under the beam have a first radius of curvature adjacent the airfoil and a second radius of curvature adjacent the shroud that is larger than the first radius of curvature.

In accordance with one detailed embodiment of the present invention, the first and second radii of curvature intersect at a point of tangency. In accordance with another detailed embodiment of the present invention, the intersection includes a straight line that is tangent to the first and second radii of curvature.

In accordance with another detailed embodiment of the present invention, the intersection includes a curved line that is tangent to the first and second radii of curvature.

A primary advantage of the present invention is the efficiency of the engine and creep resistance of the airfoil and creep and bending resistance of the shroud which results from reducing the shroud mass while maintaining the overall configuration of the surface bounding the working medium flow path by forming a depression which is generally radially outwardly of the airfoil and tapering the wings of the shroud.

Another advantage of the present invention is the fatigue life of the shroud resulting from the level of the bending stresses in the wings which occurs from transferring a portion of the rotational loads on the wings through the beam to the transition zone under the beam to permit reducing the size of the transition zone under the wings.

In one particular embodiment, an advantage is the level of creep resistance of the shroud as compared to a solid shroud which is enhanced by providing a portion of the material removed to form the depressions in the shroud and in the wings and providing a transition zone having increased mass at a location which is spanwise inwardly of the locations where shroud material was removed as compared to a shroud of the same flowpath configuration which does not have a depression. This reduces rotational forces acting on the airfoil and increases creep resistance of the airfoil and shroud under operative conditions.

The foregoing features and advantages of the present invention will become more apparent in light of the following detailed description of the invention and the accompanying drawings.

### Brief Description of Drawings

Fig. 1 is a front view of a rotor assembly
Fig. 2 is a side elevation view of the pressure side of a rotor blade;
Fig. 3 is a top view of two adjacent tip shrouds of the rotor assembly shown in Fig. 1.;
Fig. 4 is a top view of the tip shroud shown in Fig. 3;
Fig. 5 is a side elevation view of the pressure side of the rotor blade in the tip region;
Fig. 6 is a side elevation view of the suction side of the rotor blade in the tip region;
Fig. 7 is a top view of the shroud showing the location of a normal sectioning plane at thirteen locations on the tip shroud and showing the extent of the transition zone extending on the shroud and as reported in Table 1 (Fig. 7a);
Fig. 8, Fig. 9 and Fig. 10 are front, oblique, schematic perspective views of the tip shroud shown in Fig. 2.

Fig. 11 is a rear, oblique, schematic perspective view of the tip shroud shown in Fig. 2.

Fig. 12 and Fig. 13 are simple views respectively of a conical section curve and a two radius curve approximating the conical section curve.

### Detailed Description of the Invention

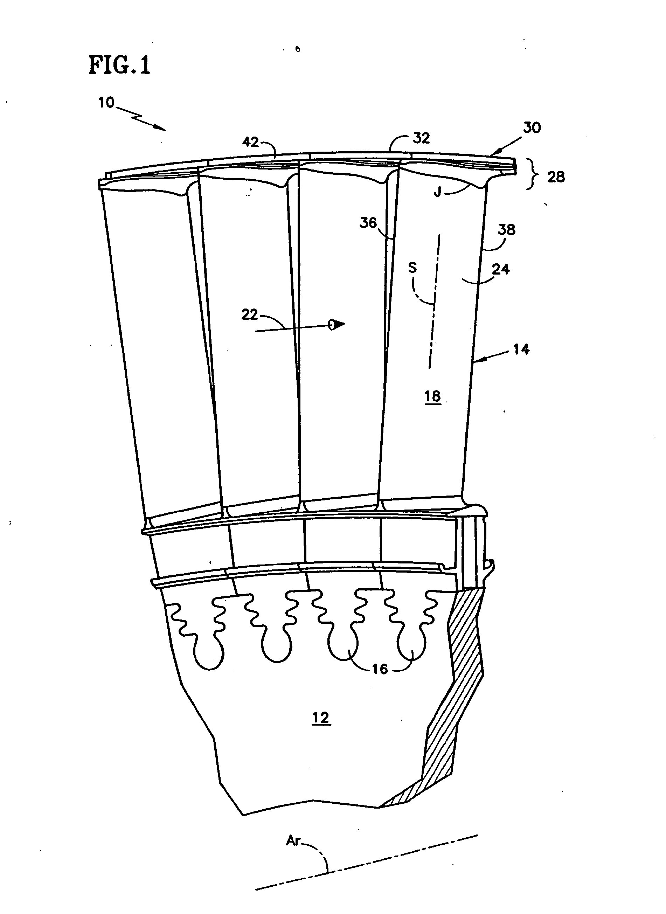

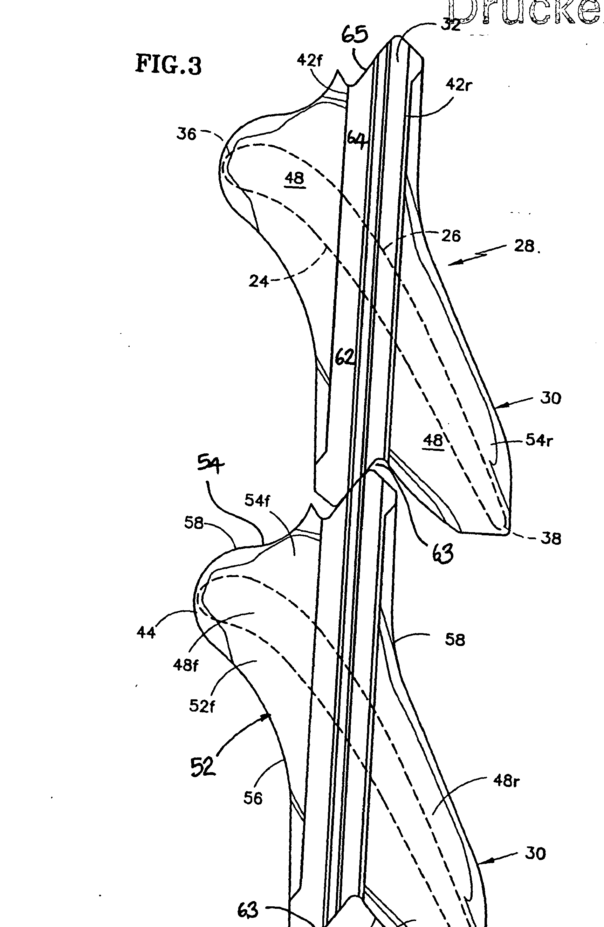

Fig. 1 is a simplified front elevation view of a rotor assembly 10 of a rotary machine having an axis Ar. The rotor assembly includes a rotating structure, as represented by the disk 12, and a plurality of outwardly extending rotor blades 14. Each rotor blade has a root 16 and an airfoil 18 being disposed about a spanwisely extending axis S, which is commonly called the stacking line S. The airfoil has a pressure side 24 and a suction side 26 as shown in Fig. 3. A flowpath 22 for working medium gases extends through the rotor blades between the sides of the airfoil.

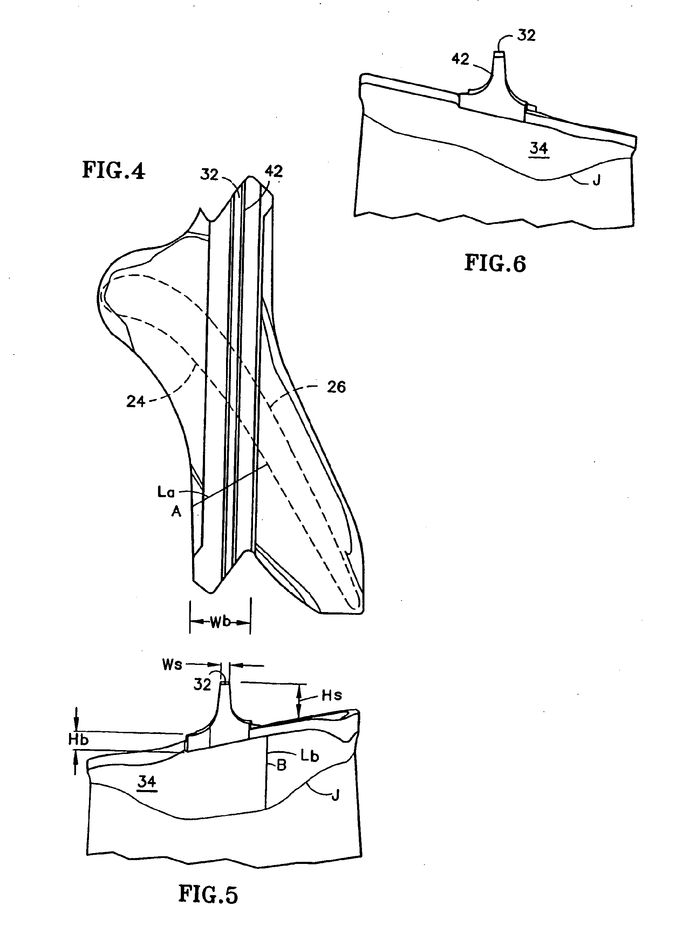

The rotor blade has a tip region 28 having a tip shroud 30. The tip shroud includes a seal land 32 which is a surface having a radius of curvature about the axis Ar. The tip shroud has a transition zone 34 which extends from the sides 24, 26 of the airfoil, as represented by the pressure side 24 shown in Fig. 1, Fig. 4, and Fig. 5; and, the suction side 26 shown in Fig. 4 and Fig. 6. The transition zone includes part of a flowpath surface which extends from a tangent to the pressure side and suction side of the airfoil along a junction J.

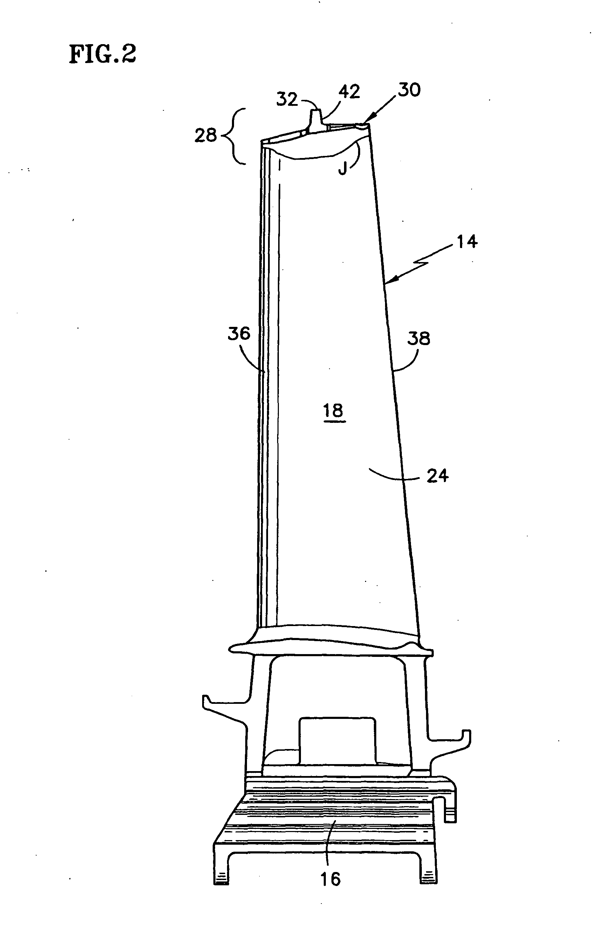

Fig. 2 is a side elevation view of the rotor blade shown in Fig. 1. The airfoil 18 has a leading edge 36 and a trailing edge 38. The tip shroud has a laterally (circumferentially) extending beam 42 which carries the seal land 32.

Fig. 3 is a top view of a pair of adjacent tip shrouds 30. Each tip shroud has a leading edge region and a trailing edge region. The tip shroud includes a depression 48 in the shroud generally radially outwardly of the airfoil and generally following the curve in the tip region of the pressure and suction sides of the airfoil from the leading edge region to the trailing edge region.

The tip shroud includes a pressure side wing 52 extending from the pressure side of the airfoil having a front portion 52f and a rear portion 52r. The portions of the wing continue the surface of the depression. The pressure side wing has a laterally facing pressure side 56. The tip shroud includes a suction side wing 54 extending from the suction side of the airfoil having a front portion 54f and a rear portion 54r. The portions of the wing continue the surface of the depression. The suction side wing 54 has a laterally facing suction side 58.

The tip shroud further has the beam 42 which has a front face 42f and a rear face 42r integral with the wings. The beam extends laterally between the wings to divide each wing into the front portion and the rear portion and laterally across the depression to divide the depression into a front portion 48f and a rear portion 48r. The beam further has a pressure side region 62 extending laterally past the pressure side of the airfoil in the tip region of the airfoil, and has a laterally facing pressure side 63 which adapts the beam to engage the suction side 65 of the beam of the adjacent airfoil. The beam also has a similar region on the suction side. The suction side region 64 extends laterally past the suction side of the airfoil in the tip region of the airfoil, and has a laterally facing suction side which adapts the suction side of the beam to engage the pressure side of the beam of the adjacent airfoil.

Fig. 4 is a top view of the rotor blade shown in Fig. 3. Fig. 5 and Fig. 6 are side elevation views, respectively, of the pressure side 24 and suction side 26 of the airfoil 18 of the rotor blade shown in Fig. 4. As mentioned, the seal land 32 extends radially outwardly from the beam 42. The seal land reinforces the beam. The combination of the seal land 32 and beam 42 extends to support the front and rear portions of the wings 52, 54 providing a portion of the support required against rotational forces acting on the wings under operative conditions. Toward this end, the beam and seal land have an inverted T-shaped cross-sectional shape. The axial width Wb of the beam is greater than four times the axial width Ws of the seal land and the radial height Hs of the seal land is greater than twice the height of the beam Hb. A fillet radius extends from the front face of the seal land to the front face of the beam and a fillet radius extends from the rear face of the seal land to the rear face of the beam.

As discussed earlier, Fig. 5 and Fig. 6 also show the junction J of the transition zone with the pressure side 24 and suction side 26 of the airfoil. The junction is formed by an infinite number of junction points each at the point of tangency of the transition zone 34 to the airfoil. The tangency of the line provides a smooth transition. As will be realized, other types of smooth transitions may exist although a tangent is preferred because of the smooth change that occurs. A normal sectioning plane P is shown. The normal sectioning plane has a first line La perpendicular to the side of the airfoil at the point of tangency (junction point) and a second line Lb passing through the junction point and parallel to the stacking line S as discussed earlier. The offset distances A and B are shown. As can be seen from the junction J, the transition zone extends much further down on the pressure side of the airfoil than on the suction side of the airfoil.

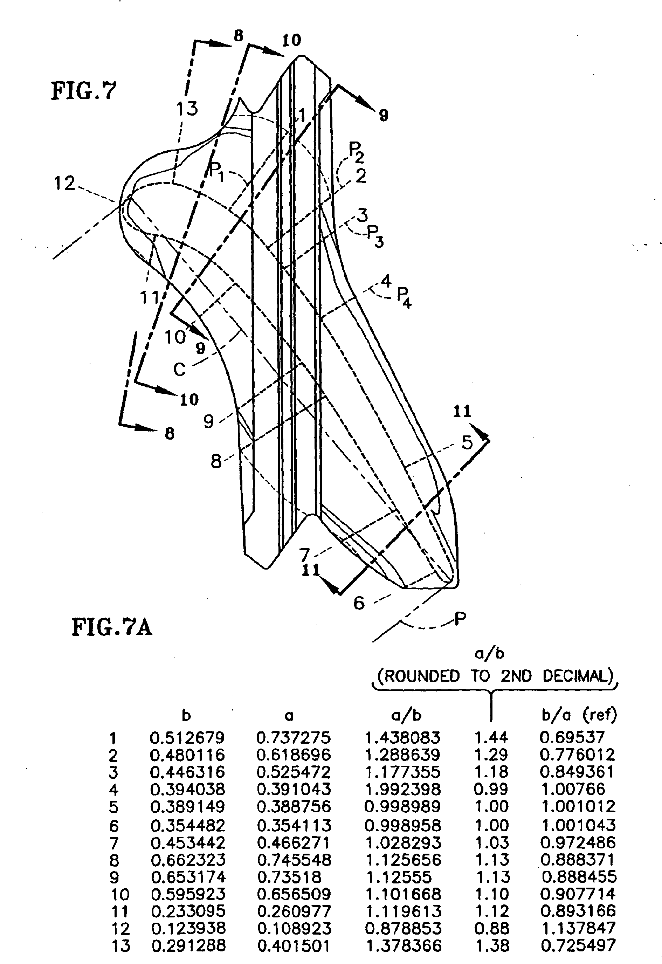

Fig. 7 is a view from above of one representative airfoil section. The surface of the airfoil is defined by a plurality of these airfoil sections each extending perpendicular to the stacking line S. Fig. 7 shows the relationship of the leading edge and the trailing edge to a chord line having a length C which connects the leading edge in the trailing edge. A mean chord line extends from the leading edge to the trailing edge about midway between the suction side and the pressure side. The leading edge region extends about three percent of the length of the chord line along a line tangent to the mean chord line at the leading edge. A trailing edge region extending about three percent of the length of the chord line along a line tangent to the mean chord line at the trailing edge,

Fig. 7 also shows thirteen normal sectioning planes intersecting the transition zone, each having a line of intersection with the surface of the transition zone. The length of the offset distances A is shown. Each sectioning plane shows that the transition zone extends to the side of the wings and under the beam to the extent shown by the curved lines near plane 1 (B1) and plane 8 (B 8).

Table 1 (Fig. 7A) is a listing of the offset distances A, B, as shown for example in Fig. 4 and Fig. 5, and the offset ratio R=A/B. The offset ratio is also shown rounded to the nearest hundredths. As can be seen from inspection of the Table, the offset ratio is fairly large and greater than one (A/B>1) on the front portion of the suction side wing and under the beam on the suction side. The ratios underneath the beam on the pressure side are smaller but are also greater than one (A/B>1). This is attributable in part to the contouring of the transition zone which has more material extending radially down the side of the airfoil on the pressure side, that is, the offset B, than on the suction side as shown in Fig. 5 and Fig. 6.

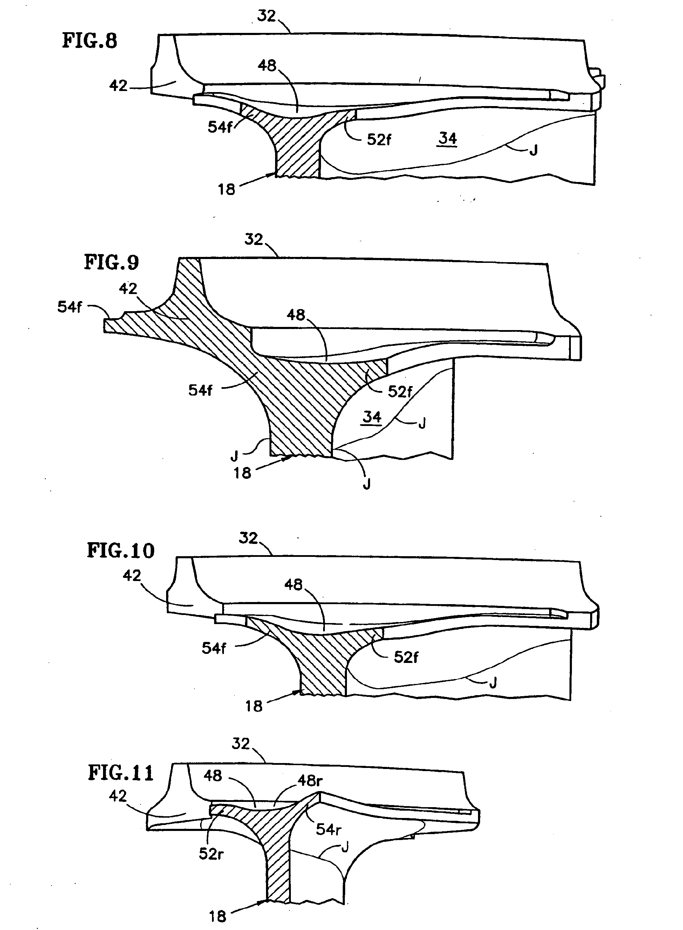

Examples of the relationship of the offset ratios of the transition line are shown in the following Figures 8-11. For example, Fig. 8 is a simplified perspective view from the front in cross-section showing a circular transition line on the pressure side of the airfoil. The normal sectioning plane P passes through the junction point J. The view is not taken parallel to the normal sectioning plane. Fig. 9 is a similar view from the front in cross-section of an elliptical transition line on the front wing of the pressure side. Fig. 10 is another front view similar to Fig. 9. Fig. 11 is a rear view in cross section similar to the front view in Fig. 9 but showing the elliptical transition line extending under the beam.

As can be seen in Figs. 4-5, Fig. 7 and Fig. 11, the transition zone extends from the junction J on the pressure side 24 of the airfoil to a line B8 under the beam. Accordingly, the transition zone extending under the beam extends to a location between the pressure side 24 of the airfoil and the pressure side 63 of the beam. Similarly, the transition zone ends at a location along the line B1 on the inwardly facing surface of the suction side region of the beam and between the suction side 26 of the airfoil and the suction side 64 of the beam.

As can be seen from these Figures, the transition zone over substantially all of its extent between the leading edge region and the trailing edge region extends to the sides of the wings such that each wing has a cross-sectional shape at a location along a normal sectioning plane that is spanwisely tapered to the sides of the wings, and that is spanwisely tapered under the beam at least as far as the immediately adjacent portion of the wing. In one particular embodiment, the transition lines in the transition zone that extended only under the wings covered over ninety-nine (99) percent of the surface area (the flow path area) under the wings with the transition zone. In other embodiments, good results are expected where the transition lines extend to cover over ninety-five (95) percent of the wing area with the transition zone. As can be seen from the table, the cross-sectional shape of the transition zone has more than one type of curvature to reduce stresses in the rotor blade as compared to transition zones having one type of curvature for the transition zone. For example, offset ratios equal to one provide circular transition lines which on the pressure side of the airfoil decreases surface stresses in the airfoil at the rear portion of the pressure side wing. Offset ratios greater than one provide elliptical shaped or true elliptical transition lines reduce stress concentration factors better than circular cross-sections. They are heavier constructions than analogous circular transition lines because more material is placed closer to the shroud at greater radial distance from the axis Ar.

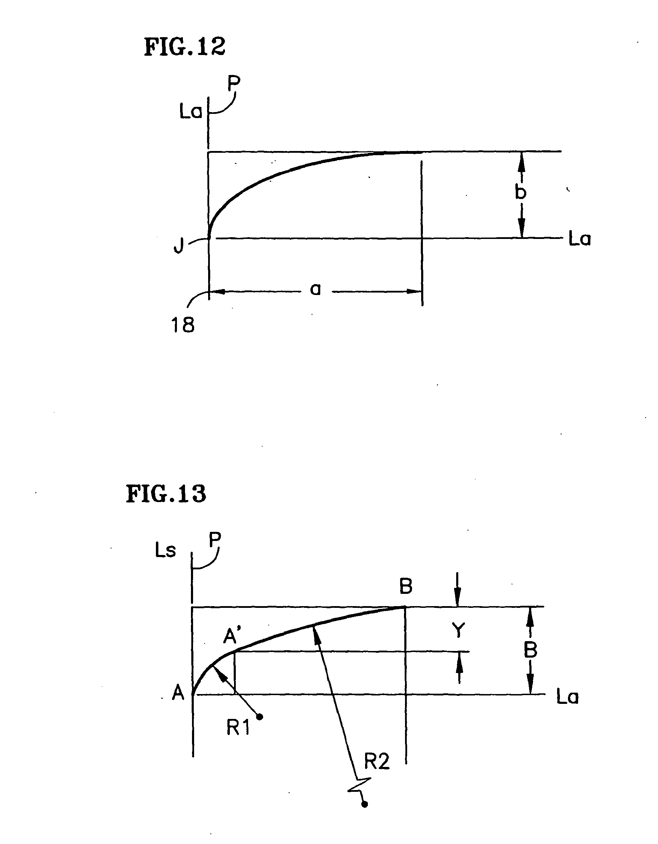

Conical section lines that represent the intersection of a plane with a right circular cone form transition lines that have the advantageous benefits of reducing stress concentration factors. These curves may be used to form transition lines. Elliptical transition lines are one example. Another example are transition lines formed with curves of multiple radii that follow a conical section lines such as an elliptical transition line and may be formed as shown in Fig. 12. These curves are used on at least one of said sides of the airfoil and show transition lines that extend under the beam that have greater bending away from the airfoil at a region closer to the airfoil on the transition line than at a region closer to the side of the shroud. As a result, and as shown in Fig. 7 and Table 1, the average of offset ratios Rb of transition lines that extend under the beam are greater than one and are greater than the average of offset ratios Rw of transition lines that extend only under the rear portion of wings. In fact, and embodiment shown, the absolute value of the transition lines Rb is greater than the ratios Rw.

Thus, the transition lines which define the contour of the flow path surface of the shroud for the transition zone of the wing and of the beam follow the shape of part of a conical section. They also have an offset ratio on the suction side of the airfoil for the beam Rb and for the forward portion of the wing Rw that is greater on average than the offset ratio on the pressure side of the airfoil for the beam Rb and for the rear portion of the wing Rw, thus providing a more elliptical flowpath surface on the suction side beam-wing forward region to reduce stress concentration factors in that region. They also provide a more circular flowpath surface on the pressure side for the beam-rear wing portion to provide transition zone material that extends down the airfoil, the offset distance B, for at least 80% of the length that the material extends laterally on the shroud, offset distance A, to reduce airfoil surface stresses as compared to an airfoil not having such a length of shroud material.

These are more easily manufactured because curves with constant radius or regions of constant radius are much easier to inspect. Thus, it is advantageous to transfer some loads from a region and to use circular curves (rear portions of wing) in those regions because the stress concentration factor is less of a concern. In regions where the stress concentration factor is of more concern, curves of multiple radii may be used to generate transition lines having a conical or almost conical curves. The advantage results because during manufacture, the transition line curves must be inspected and have a profile tolerance. In applying the tolerances, the minimum radial dimension should not be violated. However, when normal tolerances are applied in some locations on conical sections, it is difficult to determine if the curve has violated the minimum radius tolerance dimension. This is less severe and may be eliminated if a curved compound transition line is used. In those cases, the inspection criteria set out can control the radii sizes by applying a limit dimension to each of the radii.

Fig. 12 and 13 are examples of a conical transition line and a two radius curve fitted to a conical transition line. As will be realized, more than two curves could be used to generate the same transition line.

Although the invention has been shown and described with respect to detailed embodiments thereof, it should be understood by those skilled in the art that various changes in form and detail may be made without departing from the scope of the claimed invention.

## Claims

1. A rotor blade (14) for a rotary machine having a flowpath for working medium gases, the rotor blade having an inner end which includes a base which adapts the rotor blade to be joined to a rotatable structure (12), an outer end having a laterally extending surface which is disposed circumferentially about an axis (Ar) and having a radius of curvature about the axis (Ar), an airfoil having a leading edge (36), a trailing edge (38), and a suction side (26) and a pressure side (24) which each extend chordwisc from the leading edge to the trailing edge, and a tip region (28) which includes the outer end, which comprises:
a plurality of airfoil sections disposed spanwise about and perpendicular to the stacking line (5) for defining the surfaces of the airfoil, the stacking line of the airfoil extending spanwise, and each airfoil section having
a leading edge,
a trailing edge spaced chordwise from the leading edge,
a suction side extending from the leading edge to the trailing edge, and
a pressure side extending from the leading edge to the trailing edge;
a chord line having a length (C),
a mean chord line extending from the leading edge to the trailing edge about midway between the suction side and the pressure side
a leading edge region extending about three percent of the length of the chord line along a line tangent to the mean chord line at the trailing edge,
a trailing edge region extending about three percent of the length of the chord line along a line tangent to the mean chord line at the trailing edge;
a tip shroud (30) for the rotor blade disposed in the tip region; the tip shroud including depression (48) in the shroud each airfoil section having wings (52,54) extending from the sides of the airfoil, the wings including a pressure side wing (52) extending from the pressure side (24) of the airfoil having a front portion (52f) and a rear portion (52r) which continue the surface of the depression (48), and having a laterally facing pressure side
a suction side wing (54) that extends from the suction side of the airfoil having a front portion (54f) and a rear portion (54r) which continue the surface of the depression (48), and having a laterally facing suction side, and,
a seal land (32) extending radially outwardly, the seal land extending past the sides of the airfoil between the front and rear portions of the wings and having an outwardly facing surface which extends circumferentially with respect the axis (Ar) and which adapts the seal land to cooperate with adjacent structure of the rotary machine to block the leakage of working medium gases past the tip region of the rotor blade; **characterised in that** the depression (48) in the shroud is disposed generally radially and outwardly of the airfoil and generally following the curve in the tip region of the pressure and suction sides of the airfoil from the leading edge region to the trailing edge region.

2. The rotor blade as claimed in claim 1 wherein the tip shroud (30) further has a transition zone (34) extending from a junction with the suction side (26) and a junction with the pressure side (24) of the airfoil to provide a flow path surface of the shroud which has a smooth contour, and, wherein the pressure side wing (52) has a portion of the transition zone which extends from the pressure side of the airfoil, and, the suction side wing has a portion of a transition zone which extends from the suction side of the airfoil.

3. The rotor blade as claimed in claim 2 wherein the tip shroud (30) further has a beam (42) which has a front face (42f) and a rear face (42r) integral with the wings, which extends laterally between the wings (52,54) to divide each wing into a front portion and a rear portion and laterally across the depression (48) to divide the depression into a front portion (48f) and a rear portion (48r), the beam further having
a pressure side region extending laterally past the pressure side of the airfoil in the tip region of the airfoil, having a laterally facing pressure side which adapts the beam (42) to engage the suction side of the beam of the adjacent airfoil,
a portion of the transition zone (34) which extends from the pressure side of the airfoil,
a suction side region extending laterally past the suction side of the airfoil in the tip region of the airfoil, having a laterally facing suction side which adapts the suction side of the beam to engage the pressure side of the beam of the adjacent airfoil,
a portion of the transition zone (34) which extends from the suction side of the airfoil, and wherein a seal land (32) extending radially outwardly from the beam (42) and wherein the beam reinforced by the seal land extends to support the front and rear portions of the wings (52,54) to provide a portion of the support required against rotational forces acting on the wings under operative conditions.

4. The rotor blade as claimed in claim 1 wherein the tip shroud (30) further has a beam (42) which has a front face and a rear face integral with the wings (52,54), which extends laterally between the wings to divide each wing into a front portion and a rear portion and laterally across the depression (48) to divide the depression into a front portion (48f) and a rear portion (48r), the beam further having
a pressure side region extending laterally past the pressure side of the airfoil in the tip region of the airfoil, having a laterally facing pressure side which adapts the beam to engage the suction side of the beam of the adjacent airfoil,
a suction side region extending laterally past the suction side of the airfoil in the tip region of the airfoil, having a laterally facing suction side which adapts the suction side of the beam to engage the pressure side of the beam of the adjacent airfoil; and,
wherein the seal land (32) extends radially outwardly from the beam (42) and wherein the beam reinforced by the seal land extends to support the front and rear portions of the wings to provide a portion of the support required against rotational forces acting on the wings under operative conditions.

5. The rotor blade as claimed in claim 3 or 4 wherein the beam (42) and seal land (32) have an inverted T-shaped cross-sectional shape with the axial width (Wb) of the beam being greater than four times the axial width of the seal land (Ws) and the radial height (Hs) of the seal land is greater than twice the height (Hb) of the beam with a fillet radius extending from the front face of the seal land to the front face of the beam and a fillet radius extending from the rear face of the seal land to the rear face of the beam.

6. The rotor blade as claimed in claim 2, 3 or 5 wherein the rotor blade has a reference normal sectioning plane (P) passing through a point at the junction of the transition zone (34) to the airfoil that contains a first line (La) perpendicular to the side of the airfoil section at that junction point and a second line (Lb) passing through that junction point that is perpendicular to the first line and parallel to the stacking line of the airfoil;
wherein a transition line is the line of intersection of the plane (P) with the transition zone at a junction point and defines the surface contour of the transition zone at a particular location; wherein each transition line has an offset distance (A) from the airfoil which is the distance of the projection of the transition line along the first line of the plane (P) perpendicular to the side of the airfoil section, has an offset distance (B) from the shroud which is the distance of the projection of the transition line along the second line of the sectioning plane parallel to the stacking line, and has an offset ratio which is the ratio of the offset distance (A) from the airfoil divided by the offset distance (B) from the shroud.
wherein each transition line has a first end at the junction point and a second end at the point the transition zone terminates, the transition lines being smoothly recessed from a straight line connecting the ends of the transition line.

7. The rotor blade as claimed in claim 6 wherein the transition lines (34) extending under the beam (42) are part of a conical section..

8. The rotor blade as claimed in claim 7 wherein the transition lines extending under the beam (42) are part of an elliptical conical section.

9. The rotor blade as claimed in claim 7 or 8 wherein the transition lines extending under the beam (42) have multiple radii of curvature.

10. The rotor blade as claimed in claim 7 or 8, wherein the transition lines extending under the beam (42) have a first radius of curvature adjacent the airfoil and a second radius of curvature adjacent the shroud that is larger than the first radius of curvature.

11. The rotor blade as claimed in claim 10 wherein the sections of the transition lines having first and second radii of curvature each intersect at a point of tangency with the transition line.

12. The rotor blade as claimed in claim 11, wherein the intersection includes a curved line that is tangent to the first and second radii of curvature.

13. The rotor blade as claimed in claim 11 wherein the sections of the transition lines having first and second radii of curvature each intersect each other at a point of tangency.

14. The rotor blade as claimed in any preceding claim wherein the radial thickness of the wings (52,54) is decreased by the depression (48) in the wings which decreases airfoil creep as compared to a wing which does not have a radial depression.

15. The rotor blade as claimed in claim 2 or any of claims 3 to 14 as dependent directly or indirectly upon claim 2, wherein the transition zone (34) has a cross-sectional shape which is tapered to the side of the wing

16. The rotor blade as claimed in claim 6 wherein the transition line of the wing (52,54), which is also the contour of the flow path surface of the shroud for the transition zone (34) of the wing, generally follows the shape of a conical section as the transition line extends away from the airfoil and the depression above the transition zone has a spanwise depth at a first lateral location that is smaller than the spanwise depth of the depression in the wing at a second lateral location that is laterally closer to the airfoil.

17. The rotor blade as claimed in claim 16 wherein the spanwise depth of the transition zone (34) at the first location is greater than the spanwise depth at the second location.

## Patentansprüche

1. Laufschaufel (14) für eine drehende Maschine, die einen Strömungspfad für Arbeitsmediumgase besitzt, wobei die Laufschaufel ein inneres Ende, das eine Basis aufweist, das die Laufschaufel anpasst, um mit einer drehbaren Struktur (12) verbunden zu werden, ein äußeres Ende, das eine sich seitlich erstreckende Oberfläche, die in Umfangsrichtung um eine Achse (Ar) angeordnet ist, und einen Krümmungsradius um die Achse (Ar) besitzt, ein Blattprofil mit einer Vorderkante (36), einer Hinterkante (38) sowie einer Saugseite (26) und einer Druckseite (24), die sich jeweils in Tiefenrichtung von der Vorderkante zu der Hinterkante erstrecken, und einem Spitzenbereich (28), der das äußere Ende umfasst, enthält, die Folgendes umfasst:
mehrere Blattprofilabschnitte, die in Spannweitenrichtung um die und senkrecht zu der Stapellinie (5) für die Definition der Oberflächen des Blattprofils angeordnet sind, wobei sich die Stapellinie des Blattprofils in Spannweitenrichtung erstreckt und jeder Blattprofilabschnitt Folgendes besitzt:
eine Vorderkante,
eine Hinterkante, die in Tiefenrichtung von der Vorderkante beabstandet ist,
eine Saugseite, die sich von der Vorderkante zu der Hinterkante erstreckt, und
eine Druckseite, die sich von der Vorderkante zu der Hinterkante erstreckt;
eine Sehnenlinie mit einer Länge (C),
eine mittlere Sehnenlinie, die sich von der Vorderkante zu der Hinterkante etwa in der Mitte zwischen der Saugseite und der Druckseite erstreckt,
einen Vorderkantenbereich, der sich über drei Prozent der Länge der Sehnenlinie längs einer Linie, die zu der mittleren Sehnenlinie an der Hinterkante tangential ist, erstreckt,
einen Hinterkantenbereich, der sich über drei Prozent der Länge der Sehnenlinie längs einer Linie, die zu der mittleren Sehnenlinie bei der Hinterkante tangential ist, erstreckt;
eine Spitzenverkleidung (30) für die Laufschaufel, die im Spitzenbereich angeordnet ist, wobei die Spitzenverkleidung eine Vertiefung (48) in der Verkleidung aufweist; wobei jeder Blattprofilquerschnitt Flügel (52, 54) besitzt, die sich von den Seiten des Blattprofils erstrecken, wobei die Flügel einen druckseitigen Flügel (52), der sich von der Druckseite (24) des Blattprofils erstreckt und einen vorderen Abschnitt (52f) und einen hinteren Abschnitt (52r) besitzt, die die Oberfläche der Vertiefung (48) fortsetzen, und eine seitlich orientierte Druckseite besitzen,
einen saugseitigen Flügel (54), der sich von der Saugseite des Blattprofils erstreckt und einen vorderen Abschnitt (54f) sowie einen hinteren Abschnitt (54r) besitzt, die die Oberfläche der Vertiefung (48) fortsetzen, und eine seitlich orientierte Saugseite besitzt, und
einen Dichtungssteg (32), der sich radial auswärts erstreckt, wobei sich der Dichtungssteg an den Seiten des Blattprofils zwischen dem vorderen und dem hinteren Abschnitt der Flügel vorbei erstreckt und eine nach außen orientierte Oberfläche besitzt, die sich in Umfangsrichtung in Bezug auf die Achse (Ar) erstreckt und die den Dichtungssteg anpasst, um mit einer benachbarten Struktur der Drehmaschine zusammenzuwirken, um ein Austreten von Arbeitsmediumgasen an dem Spitzenbereich der Laufschaufel vorbei zu blockieren; **dadurch gekennzeichnet, dass** die Vertiefung (48) in der Verkleidung im Allgemeinen radial und außerhalb des Blattprofils angeordnet ist und im Allgemeinen der Krümmung im Spitzenbereich der Druck- und der Saugseite des Blattprofils vom Vorderkantenbereich zum Hinterkantenbereich folgt.

2. Laufschaufel nach Anspruch 1, wobei die Spitzenverkleidung (30) ferner eine Übergangszone (34) besitzt, die sich von einer Verbindung mit der Saugseite (26) und einer Verbindung mit der Druckseite (24) des Blattprofils erstreckt, um eine Strömungspfadoberfläche der Verkleidung zu schaffen, die einen gleichmäßigen Umriss besitzt, und wobei der druckseitige Flügel (52) einen Abschnitt der Übergangszone besitzt, der sich von der Druckseite des Blattprofils erstreckt, und wobei der saugseitige Flügel einen Abschnitt einer Übergangszone besitzt, der sich von der Saugseite des Blattprofils erstreckt.

3. Laufschaufel nach Anspruch 2, wobei die Spitzenverkleidung (30) ferner einen Ausleger (42) besitzt, der eine vordere Fläche (42f) und eine hintere Fläche (42r) besitzt, die einteilig mit den Flügeln ausgebildet sind, der sich seitlich zwischen den Flügeln (52, 54) erstreckt, um jeden Flügel in einen vorderen Abschnitt und einen hinteren Abschnitt zu unterteilen, und sich seitlich über die Vertiefung (48) erstreckt, um die Vertiefung in einen vorderen Abschnitt (48f) und einen hinteren Abschnitt (48r) zu unterteilen, wobei der Ausleger ferner Folgendes besitzt:
einen druckseitigen Bereich, der sich seitlich an der Druckseite des Blattprofils im Spitzenbereich des Blattprofils vorbei erstreckt und eine seitlich orientierte Druckseite besitzt, die den Ausleger (42) anpasst, um mit der Saugseite des Auslegers des benachbarten Blattprofils in Eingriff zu gelangen,
einen Abschnitt der Übergangszone (34), der sich von der Druckseite des Blattprofils erstreckt,
einen saugseitigen Bereich, der sich seitlich an der Saugseite des Blattprofils im Spitzenbereich des Blattprofils vorbei erstreckt und eine seitlich orientierte Saugseite besitzt, die die Saugseite des Auslegers anpasst, um mit der Druckseite des Auslegers des benachbarten Blattprofils in Eingriff zu gelangen,
einen Abschnitt der Übergangszone (34), der sich von der Saugseite des Blattprofils erstreckt, und
wobei ein Dichtungssteg (32) sich radial auswärts von dem Ausleger (42) erstreckt und wobei der Ausleger, der durch den Dichtungssteg verstärkt ist, so verläuft, dass er den vorderen und den hinteren Abschnitt der Flügel (52, 54) unterstützt, um einen Abschnitt für die Unterstützung zu schaffen, die gegenüber Drehkräften erforderlich ist, die auf die Flügel unter Arbeitsbedingungen wirken.

4. Laufschaufel nach Anspruch 1, wobei die Spitzenverkleidung (30) ferner einen Ausleger (42) besitzt, der eine vordere Fläche und eine hintere Fläche besitzt, die einteilig mit den Flügeln (52, 54) ausgebildet sind, der sich seitlich zwischen den Flügeln erstreckt, um jeden Flügel in einen vorderen Abschnitt und einen hinteren Abschnitt zu unterteilen, und sich seitlich über die Vertiefung (48) erstreckt, um die Vertiefung in einen vorderen Abschnitt (48f) und einen hinteren Abschnitt (48r) zu unterteilen, wobei der Ausleger ferner Folgendes besitzt:
einen druckseitigen Bereich, der sich seitlich an der Druckseite des Blattprofils im Spitzenbereich des Blattprofils vorbei erstreckt und eine seitlich orientierte Druckseite besitzt, die den Ausleger anpasst, um mit der Saugseite des Auslegers des benachbarten Blattprofils in Eingriff zu gelangen,
einen saugseitigen Bereich, der sich seitlich an der Saugseite des Blattprofils im Spitzenbereich des Blattprofils vorbei erstreckt und eine seitlich orientierte Saugseite besitzt, die die Saugseite des Auslegers anpasst, um mit der Druckseite des Auslegers des benachbarten Blattprofils in Eingriff zu gelangen, und
wobei der Dichtungssteg (32) sich radial auswärts von dem Ausleger (42) erstreckt und wobei der Ausleger, der durch den Dichtungssteg verstärkt ist, so verläuft, dass er die vorderen und hinteren Abschnitte der Flügel unterstützt, um einen Abschnitt der Unterstützung zu schaffen, die gegenüber Drehkräften erforderlich ist, die auf die Flügel unter Arbeitsbedingungen wirken.

5. Laufschaufel nach Anspruch 3 oder 4, wobei der Ausleger (42) und der Dichtungssteg (32) einen Querschnitt in Form eines umgedrehten T haben, wobei die axiale Breite (Wb) des Auslegers größer ist als die vierfache axiale Breite des Dichtungsstegs (Ws) und die radiale Höhe (Hs) des Dichtungsstegs größer ist als die doppelte Höhe (Hb) des Auslegers, wobei sich ein Ausrundungsradius von der vorderen Fläche des Dichtungsstegs zu der vorderen Fläche des Auslegers erstreckt und wobei sich ein Ausrundungsradius von der hinteren Fläche des Dichtungsstegs zu der hinteren Fläche des Auslegers erstreckt.

6. Laufschaufel nach Anspruch 2, 3 oder 5, wobei die Laufschaufel eine Referenz-Normalenschnittebene (P) besitzt, die durch einen Punkt am Übergang der Übergangszone (34) in das Blattprofil verläuft und eine erste Linie (La) senkrecht zu der Seite des Blattprofilquerschnitts an diesem Übergangspunkt und eine zweite Linie (Lb), die durch den Übergangspunkt verläuft und zu der ersten Linie senkrecht und zu der Stapellinie des Blattprofils parallel ist, enthält;
wobei eine Übergangslinie die Schnittlinie der Ebene (P) mit der Übergangszone an dem Übergangspunkt ist und den Oberflächenumriss der Übergangszone an einem bestimmten Ort definiert;
wobei jede Übergangslinie eine Versatzstrecke (A) von dem Blattprofil besitzt, die der Abstand des Vorsprungs der Übergangslinie längs der ersten Linie der Ebene (P) senkrecht zu der Seite des Blattprofilquerschnitts ist, eine Versatzstrecke (B) von der Verkleidung besitzt, die der Abstand des Vorsprungs der Übergangslinie längs der zweiten Linie der Schnittebene parallel zu der Stapellinie ist, und ein Versatzverhältnis besitzt, das das Verhältnis der Versatzstrecke (A) von dem Blattprofil dividiert durch die Versatzstrecke (B) von der Verkleidung ist,
wobei jede Übergangslinie ein erstes Ende an dem Übergangspunkt und ein zweites Ende an dem Punkt, an dem die Übergangszone endet, besitzt, wobei die Übergangslinien in Bezug auf eine die Enden der Übergangslinie verbindende gerade Linie gleichmäßig vertieft sind.

7. Laufschaufel nach Anspruch 6, wobei die Übergangslinien (34), die sich unter dem Ausleger (42) erstrecken, Teil eines konischen Abschnitts sind.

8. Laufschaufel nach Anspruch 7, wobei die Übergangslinien, die sich unter dem Ausleger (42) erstrecken, Teil eines elliptischen konischen Abschnitts sind.

9. Laufschaufel nach Anspruch 7 oder 8, wobei die Übergangslinien, die sich unter dem Ausleger (42) erstrecken, mehrere Krümmungsradien besitzen.

10. Laufschaufel nach Anspruch 7 oder 8, wobei die Übergangslinien, die sich unter dem Ausleger (42) erstrecken, einen ersten Krümmungsradius in der Nähe des Blattprofils und einen zweiten Krümmungsradius in der Nähe der Verkleidung, der größer ist als der erste Krümmungsradius, besitzen.

11. Laufschaufel nach Anspruch 10, wobei sich die Abschnitte der Übergangslinien, die den ersten bzw. den zweiten Krümmungsradius besitzen, an einem Tangentenpunkt mit der Übergangslinie schneiden.

12. Laufschaufel nach Anspruch 11, wobei der Schnitt eine gekrümmte Linie aufweist, die zu dem ersten und zu dem zweiten Krümmungsradius tangential ist.

13. Laufschaufel nach Anspruch 11, wobei sich die Abschnitte der Übergangslinien, die den ersten bzw. den zweiten Krümmungsradius haben, an einem Tangentialpunkt schneiden.

14. Laufschaufel nach einem vorhergehenden Anspruch, wobei die radiale Dicke der Flügel (52, 54) durch die Vertiefung (48) in den Flügeln verringert ist, wodurch das Blattprofilkriechen im Vergleich zu einem Flügel, der keine radiale Vertiefung besitzt, verringert ist.

15. Laufschaufel nach Anspruch 2 oder einem der Ansprüche 3 bis 14, wenn direkt oder indirekt abhängig von Anspruch 2, wobei die Übergangszone (34) eine Querschnittsform hat, die zur Seite des Flügels konisch zuläuft.

16. Laufschaufel nach Anspruch 6, wobei die Übergangslinie des Flügels (52, 54), die auch der Umriss der Strömungspfadoberfläche der Verkleidung für die Übergangszone (34) des Flügels ist, im Allgemeinen der Form eines konischen Abschnitts folgt, wenn sich die Übergangslinie von dem Blattprofil weg erstreckt, und die Vertiefung über der Übergangszone eine Tiefe in Spannweitenrichtung an einem ersten seitlichen Ort besitzt, die kleiner ist als die Tiefe in Spannweitenrichtung der Vertiefung in dem Flügel an einem zweiten seitlichen Ort, der sich seitlich näher bei dem Blattprofil befindet.

17. Laufschaufel nach Anspruch 16, wobei die Tiefe in Spannweitenrichtung der Übergangszone (34) an dem ersten Ort größer ist als die Tiefe in Spannweitenrichtung an dem zweiten Ort.

## Revendications

1. Aube de rotor (14) pour une machine rotative comprenant un chemin d'écoulement pour des gaz de fluide moteur, l'aube de rotor présentant une extrémité intérieure comprenant une base qui adapte l'aube de rotor à joindre à une structure rotative (12), une extrémité extérieure présentant une surface s'étendant latéralement qui est disposée de façon circonférentielle autour d'un axe (Ar) et présentant un rayon de courbure autour de l'axe (Ar), une surface portante présentant un bord d'attaque (36), un bord de fuite (38) et un côté d'aspiration (26) et un côté de pression (24) qui s'étendent chacun dans le sens de la corde du bord d'attaque au bord de fuite, et une région de pointe (28) qui inclut l'extrémité extérieure, comprenant:
une pluralité de sections de surface portante qui sont disposées dans le sens de l'envergure autour de et perpendiculairement à la ligne de superposition (5) afin de définir les surfaces de la surface portante, la ligne de superposition de la surface portante s'étendant dans le sens de l'envergure, et chaque section de surface portante comprenant:
un bord d'attaque,
un bord de fuite qui est espacé dans le sens de la corde du bord d'attaque,
un côté d'aspiration qui s'étend du bord d'attaque au bord de fuite, et
un côté de pression qui s'étend du bord d'attaque au bord de fuite,
une corde de référence qui présente une longueur (C),
une corde de référence intermédiaire qui s'étend du bord d'attaque au bord de fuite environ à mi-distance entre le côté d'aspiration et le côté de pression,
une région de bord d'attaque qui s'étend sur environ trois pour cent de la longueur de la corde de référence le long d'une ligne tangente à la corde de référence intermédiaire au bord de fuite, et
une région de bord de fuite qui s'étend sur environ trois pour cent de la longueur de la corde de référence le long d'une ligne tangente à la corde de référence intermédiaire au bord de fuite,
un carénage de pointe (30) pour l'aube de rotor qui est disposé dans la région de pointe, le carénage de pointe comportant une dépression (48) dans le carénage, chaque section de surface portante présentant des ailes (52, 54) qui s'étendent à partir des côtés de la surface portante, les ailes comprenant une aile du côté de pression (52) qui s'étend à partir du côté de pression (24) de la surface portante et qui présente une partie avant (52f) et une partie arrière (52r) qui continuent la surface de la dépression (48), et qui présente un côté de pression orienté latéralement, une aile du côté d'aspiration (54) qui s'étend à partir du côté d'aspiration de la surface portante et qui présente une partie avant (54f) et une partie arrière (54r) qui continuent la surface de la dépression (48), et qui présente un côté d'aspiration orienté latéralement, et
un méplat d'étanchéité (32) qui s'étend radialement vers l'extérieur, le méplat d'étanchéité s'étendant au-delà des côtés de la surface portante entre les parties avant et arrière des ailes, et présentant une surface orientée vers l'extérieur qui s'étend de façon circonférentielle par rapport à l'axe (Ar) et qui adapte le méplat d'étanchéité afin qu'il coopère avec une structure adjacente de la machine rotative pour bloquer la fuite de gaz de fluide moteur au-delà de la région de pointe de l'aube de rotor,
**caractérisée en ce que** la dépression (48) dans le carénage est disposée essentiellement radialement à et vers l'extérieur de la surface portante en suivant essentiellement la courbe dans la région de pointe des côtés de pression et d'aspiration de la surface portante de la région de bord d'attaque à la région de bord de fuite.

2. Aube de rotor selon la revendication 1, dans laquelle le carénage de pointe (30) comprend en outre une zone de transition (34) qui s'étend à partir d'une jonction avec le côté d'aspiration (26) et une jonction avec le côté de pression (24) de la surface portante de manière à former une surface de chemin d'écoulement du carénage qui présente un contour régulier, et dans laquelle l'aile du côté de pression (52) présente une partie de la zone de transition qui s'étend à partir du côté de pression de la surface portante, et l'aile du côté d'aspiration présente une partie de la zone de transition qui s'étend à partir du côté d'aspiration de la surface portante.

3. Aube de rotor selon la revendication 2, dans laquelle le carénage de pointe (30) comprend en outre une poutre (42) présentant une face avant (42f) et une face arrière (42r) intégrée aux ailes, qui s'étend latéralement entre les ailes (52, 54) afin de diviser chaque aile en une partie avant et une partie arrière, et latéralement en travers de la dépression (48) afin de diviser la dépression en une partie avant (48f) et une partie arrière (48r), la poutre comprenant en outre:
une région du côté de pression qui s'étend latéralement au-delà du côté de pression de la surface portante dans la région de pointe de la surface portante, comprenant un côté de pression orienté latéralement qui adapte la poutre (42) pour engager le côté d'aspiration de la poutre de la surface portante adjacente,
une partie de la zone de transition (34) qui s'étend à partir du côté de pression de la surface portante,
une région du côté d'aspiration qui s'étend latéralement au-delà du côté d'aspiration de la surface portante dans la région de pointe de la surface portante, comprenant un côté d'aspiration orienté latéralement qui adapte le côté d'aspiration de la poutre pour engager le côté de pression de la poutre de la surface portante adjacente,
une partie de la zone de transition (34) qui s'étend à partir du côté d'aspiration de la surface portante, et
dans laquelle un méplat d'étanchéité (32) s'étend radialement vers l'extérieur à partir de la poutre (42), et dans laquelle la poutre renforcée par le méplat d'étanchéité s'étend pour supporter les régions avant et arrière des ailes (52, 54) afin de former une partie du support requis contre les forces de rotation qui agissent sur les ailes dans les conditions de fonctionnement.

4. Aube de rotor selon la revendication 1, dans laquelle le carénage de pointe (30) comprend en outre une poutre (42) présentant une face avant et une face arrière intégrée aux ailes (52, 54), qui s'étend latéralement entre les ailes afin de diviser chaque aile en une partie avant et une partie arrière, et latéralement en travers de la dépression (48) afin de diviser la dépression en une partie avant (48f) et une partie arrière (48r), la poutre comprenant en outre:
une région du côté de pression qui s'étend latéralement au-delà du côté de pression de la surface portante dans la région de pointe de la surface portante, comprenant un côté de pression orienté latéralement qui adapte la poutre pour engager le côté d'aspiration de la poutre de la surface portante adjacente,
une région du côté d'aspiration qui s'étend latéralement au-delà du côté d'aspiration de la surface portante dans la région de pointe de la surface portante, comprenant un côté d'aspiration orienté latéralement qui adapte le côté d'aspiration de la poutre pour engager le côté de pression de la poutre de la surface portante adjacente, et
dans laquelle le méplat d'étanchéité (32) s'étend radialement vers l'extérieur à partir de la poutre (42), et dans laquelle la poutre renforcée par le méplat d'étanchéité s'étend pour supporter les régions avant et arrière des ailes afin de former une partie du support requis contre les forces de rotation qui agissent sur les ailes dans les conditions de fonctionnement.

5. Aube de rotor selon la revendication 3 ou 4, dans laquelle la poutre (42) et le méplat d'étanchéité (32) présentent une forme de section transversale en forme de T inversé où la largeur axiale (Wb) de la poutre est plus grande que quatre fois la largeur axiale du méplat d'étanchéité (Ws), et la hauteur radiale (Hs) du méplat d'étanchéité est plus grande que deux fois la hauteur (Hb) de la poutre avec un congé de raccordement qui s'étend depuis la face avant du méplat d'étanchéité jusqu'à la face avant de la poutre, et un congé de raccordement qui s'étend depuis la face arrière du méplat d'étanchéité jusqu'à la face arrière de la poutre.

6. Aube de rotor selon la revendication 2, 3 ou 5, dans laquelle l'aube de rotor comprend un plan de coupe normal de référence (P) qui passe par un point à la jonction de la zone de transition (34) à la surface portante et qui contient une première ligne (La) perpendiculaire au côté de la section de surface portante à ce point de jonction, et une deuxième ligne (Lb) qui passe par ce point de jonction qui est perpendiculaire à la première ligne et parallèle à la ligne de superposition de la surface portante,
dans laquelle une ligne de transition est la ligne d'intersection du plan (P) avec la zone de transition à un point de jonction et définit le contour de surface de la zone de transition en un emplacement particulier,
dans laquelle chaque ligne de transition présente une distance de décalage (A) par rapport à la surface portante qui correspond à la distance de la projection de la ligne de transition le long de la première ligne du plan (P) perpendiculaire au côté de la section de surface portante, présente une distance de décalage (B) par rapport au carénage qui correspond à la distance de la projection de la ligne de transition le long de la deuxième ligne du plan de coupe parallèle à la ligne de superposition, et présente un rapport de décalage qui équivaut au rapport de la distance de décalage (A) par rapport à la surface portante divisée par la distance de décalage (B) par rapport au carénage,
dans laquelle chaque ligne de transition présente une première extrémité au point de jonction, et une deuxième extrémité au point où la zone de transition se termine, les lignes de transition étant en retrait de façon régulière par rapport à une ligne droite qui relie les extrémités de la ligne de transition.

7. Aube de rotor selon la revendication 6, dans laquelle les lignes de transition (34) qui s'étendent en dessous de la poutre (42) font partie d'une section conique.

8. Aube de rotor selon la revendication 7, dans laquelle les lignes de transition qui s'étendent en dessous de la poutre (42) font partie d'une section conique elliptique.

9. Aube de rotor selon la revendication 7 ou 8, dans laquelle les lignes de transition qui s'étendent en dessous de la poutre (42) présentent de multiples rayons de courbure.

10. Aube de rotor selon la revendication 7 ou 8, dans laquelle les lignes de transition qui s'étendent en dessous de la poutre (42) présentent un premier rayon de courbure à proximité de la surface portante, et un deuxième rayon de courbure à proximité du carénage, qui est plus grand que le premier rayon de courbure.

11. Aube de rotor selon la revendication 10, dans laquelle les sections des lignes de transition qui présentent des premier et deuxième rayons de courbure se coupent mutuellement en un point de tangence avec la ligne de transition.

12. Aube de rotor selon la revendication 11, dans laquelle l'intersection présente une ligne courbe qui est tangente aux premier et deuxième rayons de courbure.

13. Aube de rotor selon la revendication 11, dans laquelle les sections des lignes de transition qui présentent des premier et deuxième rayons de courbure se coupent mutuellement en un point de tangence.

14. Aube de rotor selon l'une quelconque des revendications précédentes, dans laquelle l'épaisseur radiale des ailes (52, 54) est diminuée par la dépression (48) dans les ailes qui diminue le fluage de la surface portante comparativement à une aile qui ne comporte pas de dépression radiale.

15. Aube de rotor selon la revendication 2 ou l'une quelconque des revendications 3 à 14 lorsqu'elles dépendent directement ou indirectement de la revendication 2, dans laquelle la zone de transition (34) présente une forme de section transversale qui est conique vers le côté de l'aile.

16. Aube de rotor selon la revendication 6, dans laquelle la ligne de transition de l'aile (52, 54), qui est également le contour de la surface du chemin d'écoulement du carénage pour la zone de transition (34) de l'aile, suit d'une manière générale la forme d'une section conique lorsque la ligne de transition s'étend à l'écart de la surface portante et la dépression au-dessus de la zone de transition présente une profondeur dans le sens de l'envergure en un premier emplacement latéral qui est plus petite que la profondeur dans le sens de l'envergure de la dépression dans l'aile à un deuxième emplacement latéral qui est latéralement plus proche de la surface portante.

17. Aube de rotor selon la revendication 16, dans laquelle la profondeur dans le sens de l'envergure de la zone de transition (34) au premier emplacement est plus grande que la profondeur dans le sens de l'envergure au deuxième emplacement.
